# EUROPEAN PATENT SPECIFICATION

(11) **EP 1 304 788 B1**
(45) Date of publication and mention of the grant of the patent: **10.08.2011**
(21) Application number: 01932313.8
(22) Date of filing: 29.05.2001
(51) Int. Cl.: H02J 7/14

(54) **LAMP LIGHTING AND BATTERY CHARGING CONTROLLER**
STEUERUNG FÜR LAMPENBELEUCHTUNG UND BATTERIEAUFLADUNG
ECLAIRAGE A LAMPE ET CONTROLEUR DE CHARGE DE BATTERIE

(30) Priority: 06.06.2000 JP 2000168741; 06.06.2000 JP 2000168775
(43) Date of publication of application: 23.04.2003
(73) Proprietor: Mitsuba Corporation, Kiryu-shi, Gunma 376-8555 (JP)
(72) Inventor: SUZUKI, Takashi, Gunma-ken (JP); ARAI, Makoto, Kiryu-shi, Gunma 376-0013 (JP); TANAKA, Kazuaki, Kiryu-shi, Gunma 376-0011 (JP)
(74) Representative: Machtalère, Georges
(86) International application number: PCT/JP2001/004485
(87) International publication number: WO 2001/095455

(56) References cited:
- EP-A2- 0 936 720
- FR-A1- 2 742 278
- JP-A- 8 168 190
- JP-A- 11 022 611
- JP-A- 11 252 815

## Description

### TECHNICAL FIELD

The present invention relates to a lamp lighting and battery charging control system in which an AC voltage from an electric generator driven by an internal combustion engine is used to light a lamp as well as to charge a battery.

### BACKGROUND OF THE INVENTION

In some of the vehicles such as motorcycles, a voltage having an AC waveform is produced from an electric generator which is driven by an internal combustion engine, and the AC voltage from the generator is used to light a lamp such as a headlight as well as to charge a battery for supplying DC voltage to various DC loads which may include a stop lamp. For example, it may be possible that positive waves of the AC voltage from the generator are used to charge the battery while negative waves are used to light the headlight.

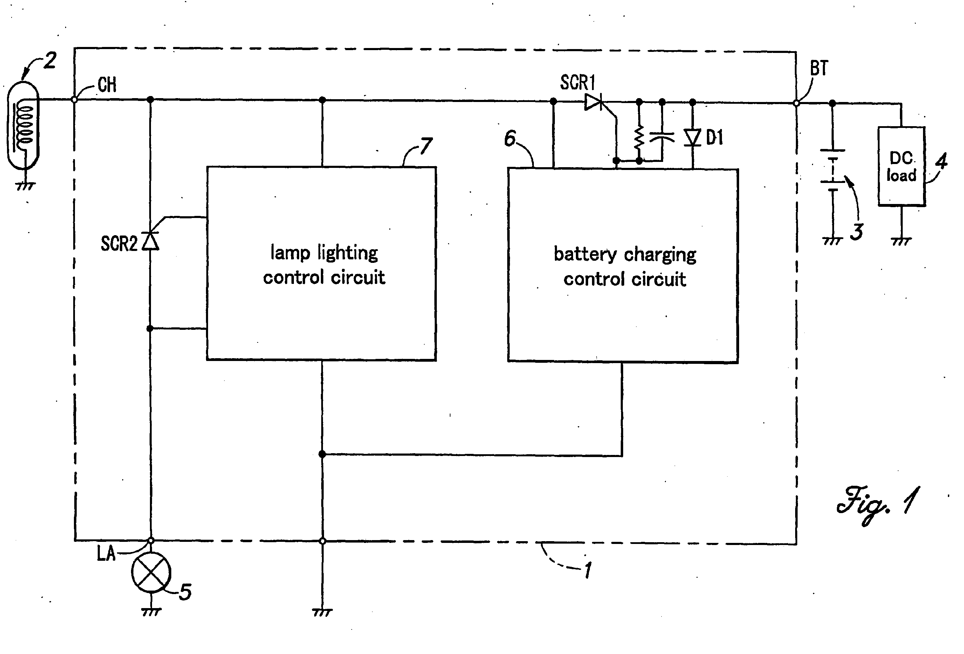

Figure 1 is a block diagram for showing a typical control system for conducting such a battery charging and lamp lighting control. In the shown system 1, an end tap (output terminal) of a coil 2 of a magneto-generator that is driven in conjunction with an internal combustion engine of a vehicle is connected to a power source terminal CH of the system 1, while a battery 3 and a DC load 4 representing various electric equipment such as a stop lamp are connected to an output terminal BT of the control system 1.

The control system 1 comprises a first thyristor SCR1 provided on a power line extending between the terminals CH and BT. The first thyristor SCR1 functions as a first switch element for selectively transmitting positive waves of the AC voltage from the power source terminal CH to the output terminal BT. The first thyristor SCR1 is controlled by a battery charging control circuit 6 which detects a voltage at the output terminal BT (or battery voltage), and depending on the detected battery voltage, controls the turning on of the thyristor SCR1 so as to prevent overcharge of the battery 3.

A lamp (headlight) 5 is connected to a lamp terminal LA of the control system 1. Between the power source terminal CH and the lamp terminal LA of the control system 1 is connected a second thyristor SCR2 functioning as a second switch element for selectively conducting negative waves of the AC voltage to the lamp 5. Further, the control system 1 comprises a lamp lighting control circuit 7 for controlling the turning on of the second thyristor SCR2 depending on an effective (or root mean square value of) voltage of the lamp 5 to protect the lamp 5 from overvoltage, for example.

However, in the above shown system, a problem may arise when the DC load 4 is driven (such as when the stop lamp is turned on). The driving of DC load 4 draws out a relatively large electric current from the battery 3, decreasing the battery voltage and thereby necessitating charging of the battery 3. Thus, in the above system, when a positive voltage is generated from the electric generator 2 and the first thyristor SCR1 is turned on, a relatively large electric current flows to the battery 3 from the generator 2. Due to an inductance of the electric generator 2, this can delay the negative voltage wave generation. Such delay in the negative voltage generation can undesirably influence the control of the turn-on timing of the second thyristor SCR2 by the lamp lighting control circuit 6. For example, if the turn-on timing is undesirably delayed, the lamp voltage could be excessively small, causing momentary darkening or brightness fluctuation of the lamp 5.

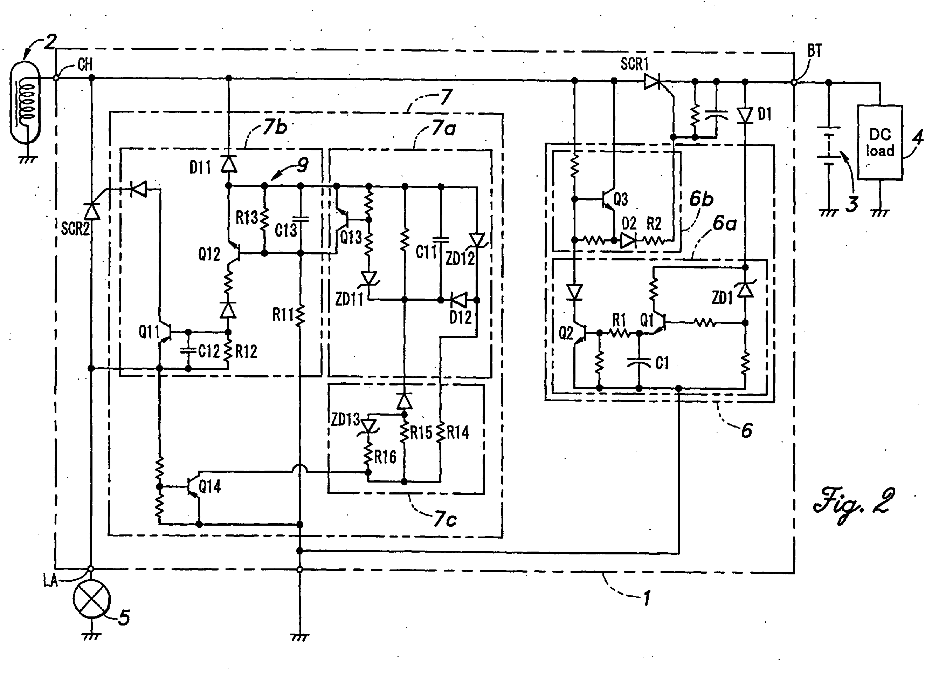

Figure 2 is a circuit diagram for showing an exemplary lamp lighting and battery charging control circuit for explaining the above problem more concretely. In the drawing, component parts similar to those shown in Figure 1 are denoted with same reference numerals.

As shown in Figure 2, the battery charging control circuit 6 includes a battery voltage detecting block 6a and a thyristor drive block 6b. The battery voltage detecting block 6a comprises a transistor Q1 which is adapted to turn on when the battery voltage is greater than a prescribed value. More specifically, a zener diode ZD1 is provided on a line connecting a base of the transistor Q1 to the output terminal BT so that when the battery voltage becomes greater than a breakdown voltage of the zener diode ZD1, an electric current is allowed to flow to the base of the transistor Q1 to turn it on. The block 6a further comprises a transistor Q2 having a base connected to an emitter of the transistor Q1 and an emitter connected to the ground. More specifically, the base of the transistor Q2 is connected to the emitter of the transistor Q1 via a CR time constant circuit comprising a resistor R1 and a capacitor C1. Thus, when the transistor Q1 is turned on, an electric current flows to the capacitor C1 and when a voltage across the capacitor C1 reaches a prescribed value, an electric current flows to the base of the transistor Q2 to turn it on.

The thyristor drive block 6b comprises a diode D2 for allowing an electric current to flow from the anode side of the thyristor SCR1 to the gate of the same when a positive voltage is generated from the electric generator 2. A transistor Q3 and a resistor R2 are provided to control an amount of electric current flowing to the gate of the thyristor SCR1.

An anode side of the diode D2 of the thyristor drive block 6b is connected to a collector of the transistor Q2 of the battery voltage detecting block 6a so that when the transistor Q2 is turned on, the current supply to the gate of the thyristor SCR1 through the diode D2 is prevented, or in other words, the operation of the thyristor drive block 6b is disabled. Thus, when the battery voltage is high and the transistor Q2 is in the on state, even when a positive voltage is generated from the electric generator 2, the thyristor SCR1 is kept in the off state and charging of the battery 3 is not conducted, whereby the battery 3 is protected from overcharge.

When the DC load 4 consumes the battery power (when the stop lamp is turned on, for example), decreasing the voltage of the battery 3 as well as the voltage across the capacitor C1, the transistors Q1 and Q2 are turned off so that when a positive voltage wave is produced from the electric generator 2, an electric current is allowed to flow to the gate of the thyristor SCR1 via the diode D2, to thereby turn it on. This can allow the battery 3 to be charged by the positive wave of the AC voltage from the generator 2.

The lamp lighting control circuit 7 comprises a lamp voltage detecting block 7a, a thyristor drive block 7b and a generator output voltage detecting block 7c.

The thyristor drive block 7b comprises a transistor Q11 connected to a gate of the second thyristor SCR2 so that when the transistor Q11 is turned on, the thyristor SCR2 is turned on to light the lamp 5. The transistor Q11 is also connected to another transistor Q12 via a parallel-connected capacitor C12 and resistor R12 serving as a noise absorbing circuit whereby when the transistor Q12 is turned on, the transistor Q11 is turned on. An emitter of the transistor Q12 is connected to the power source terminal CH via a diode D11 for allowing an electric current to flow only toward the terminal CH and a base of the transistor Q12 is connected to the ground via a resistor R11 so that a negative voltage from the electric generator 2 can cause an electric current to flow through the base of the transistor Q12 to turn it on. Further, the transistor Q12 is provided in its base circuit with a delay circuit 9 embodied as a CR time constant circuit. More specifically, the CR time constant circuit comprises a resistor R13 and capacitor C13 connected in parallel between the emitter and base of the transistor Q12. Thus, when a negative voltage is generated from the electric generator 2, an electric current first flows to the capacitor C13 in the delay circuit 9 via the resistor R11 so as to charge the capacitor C13, and after a delay time defined by the delay circuit 9 (or after a time required for fully charging the capacitor C13) from the generation of the negative voltage from the electric generator 2, a base current flows to the base of the transistor Q12 to turn it on. The turning on of the transistor Q12 causes the transistor Q11 to turn on so that a gate voltage is applied to the second thyristor SCR2. This turns on the thyristor SCR2, whereby the lamp 5 is lighted.

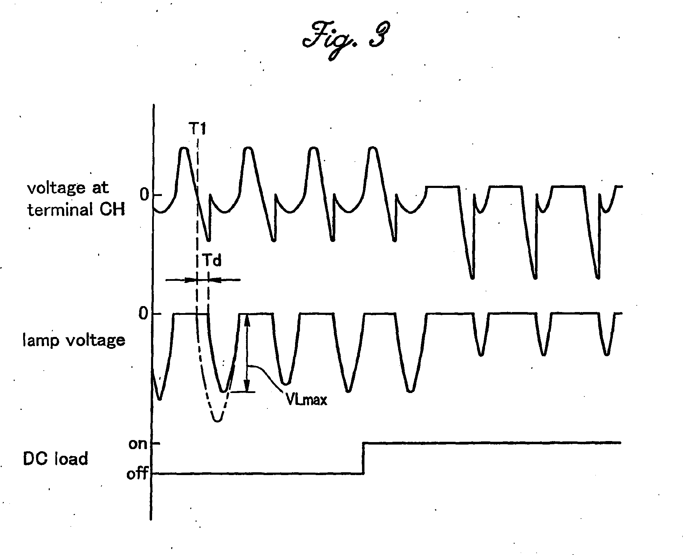

In this way, as shown in a waveform diagram of Figure 3, the lamp voltage (lower waveform) is generated (or a negative voltage from the generator 2 is conducted to the lamp 5) after a delay time Td has passed from a negative voltage generation timing T1 in the AC voltage (upper waveform). This results in the lamp voltage having a smaller peak value (or amplitude) VLₘₐₓ than that without such a delay (phantom line in Figure 3). Also, the period of time during which the voltage is applied to the lamp 5 (or duration time) is reduced due to the delay time Td. Thus, by delaying the turning on of the thyristor SCR2 from the negative voltage generation timing T1, a size (amplitude and duration time) of the voltage half-wave provided to the lamp 5 can be preferably reduced without dissipating electric energy as heat. It should be noted that in Figure 3 the voltage at the terminal CH and the lamp voltage are shown in different scales for compensating the amplitude difference therebetween.

The lamp voltage detecting block 7a comprises a transistor Q13 for selectively short-circuiting the base and emitter of the transistor Q12 of the thyristor drive block 7b to prevent the transistor Q12 from turning on or in other words, disable the operation of the thyristor drive block 7b. A base circuit of the transistor Q13A comprises a capacitor C11. The capacitor C11 is charged by an electric current flowing through the generator output voltage detecting block 7c and a transistor Q14 which is adapted to turn on while an electric current is flowing through the lamp 5. Therefore, the capacitor C11 is charged only while an electric current is flowing through the lamp 5 and discharged through a resister connected thereto in parallel during other period of time whereby the voltage across the capacitor C11 represents the effective lamp voltage. Further, a zener diode ZD11 is provided between the capacitor C11 and the base of the transistor Q13 so that when the voltage across the capacitor C11 is greater than a breakdown voltage of the zener diode ZD11, an electric current flows to the base of the transistor Q13 to turn it on. Thus, the limit value for the lamp effective voltage is determined by the breakdown voltage of the zener diode ZD11.

In this way, when the lamp effective voltage is below the limit value, the transistor Q13 in the lamp voltage detecting block 7a is in an off state, allowing the operation of the thyristor drive block 7b so that the lamp 5 is lighted by negative voltages from the electric generator 2, but when the lamp effective voltage is detected to be greater than the limit value by the breakdown of the zener diode ZD11, the transistor Q13 is turned on, thereby disabling the thyristor drive block 7b and preventing the generator's negative voltage from being supplied to the lamp 5. Thus, the lamp lighting control circuit 7 can intermittently supply negative voltages to the lamp 5 depending on the lamp effective voltage, to thereby carry out a so-called intermittent voltage supply control.

It should be noted here that at low engine speed where the AC voltage frequency is low and the intermittent voltage supply control would cause a perceptible flickering of the lamp 5, the lamp voltage control can be preferably achieved by delaying the turning on of the thyristor SCR2 with respect to the start of generation of the negative voltage wave from the generator 2 by means of the delay circuit 9, and therefore, the intermittent voltage supply control may be avoided at such low engine speed region. In other words, the system of Figure 2 can conduct the intermittent voltage supply control only in a high engine speed region where the AC voltage frequency is high and thus the lamp flickering can be inconspicuous.

The generator output voltage detection block 7c is provided for optimizing the operation of the above intermittent voltage supply control carried out based on the lamp effective voltage. As shown, the generator output voltage detection block 7c comprises three electric current passages, the first comprising a resistor R14, the second comprising a resistor R15 and the third comprising a resistor R16 and a zener diode ZD13. The first passage containing the resistor R14 is connected to a connection point between a diode D12 and a zener diode ZD12 which are connected in parallel with the capacitor C11. The resistor R14 has a relatively small resistance, and when the engine speed is low and the generator output voltage is small, an electric current passing through the resistor R14 mainly charges the capacitance C11. As the engine speed becomes higher together with the generator output voltage, increasing the amplitude of electric current flowing through the resistor R14, the zener diode ZD12 breaks down to prevent the current through the resistor R14 from flowing to the capacitor C11. Thus, in such a state, the capacitor C11 is charged only by an electric current flowing through the resistor R15 having a relatively high resistance. As the engine speed increases higher, further increasing the generator output voltage, the zener diode ZD13 undergoes a breakdown so that an electric current flowing through the resistor R16 is also used to charge the capacitor C11, to thereby charge the capacitor C11 more quickly. Such control of the electric current passages depending on the generator output voltage (or engine speed) enables adjustment of the charging operation of the capacitor C11 to thereby conduct optimal lamp effective voltage control (or intermittent voltage supply control).

As mentioned above, however, this system may have a problem when the DC load 4 is driven (such as when the stop lamp is turned on). When the DC load 4 is driven and the battery 3 is charged by a positive voltage from the electric generator 2 as shown in a middle portion of Figure 3, due to an inductance of the electric generator 2, the start of generation of the subsequent negative wave is delayed. This influences the above mentioned delay caused by the delay circuit 9, resulting in over-delay of the start of conducting the negative voltage to the lamp 5 and hence over-reduction in the lamp voltage, as also seen in Figure 3. Thus, there may be a problem that when the DC load 4 is driven, the lamp 5 such as a headlight becomes dark, causing an undesirable fluctuation in the brightness of the lamp 5.

JP 11 252 815 A describes a charging and lighting control circuit with a switching element between a coil of a power generator and a lamp, a lighting control circuit for controlling the switch, a thyristor between the coil and a battery, and a charging control circuit for controlling such a thyristor. The switching element is formed of a FET and a parasitic diode, which pass a negative voltage. When a negative voltage waveform is generated, its total current is supplied to a lamp with the parasitic diode, and when a positive voltage waveform is generated, the FET is opened, when the voltage value exceeds the rated voltage of the lamp. Thereby, the current supply to the lamp is stopped, and the entire excess power is made useable for charging. A part of such power is used for lighting, and the rest may be used for charging when the sine wave is generated, and a necessary charging current can be ensured.

JP-A-8 168 190 describes a charge control circuit comprising a battery voltage control circuit which detects the voltage of a battery and when it is lower than a set level, thyristors are turned ON to charge the battery. A head lamp voltage control circuit detects the voltage across a head lamp and when the detected voltage exceeds a predetermined level, thyristors are turned OFF. Moreover, the head lamp voltage control circuit and the battery voltage control circuit may be connected with a signal wire such that a control signal for interlocking both control circuits may be transmitted.

### BRIEF SUMMARY OF THE INVENTION

In view of such problems of the prior art, a primary object of the present invention is to provide a lamp lighting and battery charging control system for conducting lamp lighting and battery charging by an AC voltage produced from an electric generator driven by an internal combustion engine without causing overvoltage or overcharge of the lamp and battery, which can substantially reduce or compensate undesirable influence of the charging of the battery on the lamp lighting control.

A second object of the present invention is to provide such a lamp lighting and battery charging control system simple in configuration and low at cost.

These objects and other objects are solved by the features of the independent claim. A lamp lighting and battery charging system as specified in the preamble of claim 1 is e.g. known from EP-A2-0 936 720. The novel features according to the invention are defined in the characterizing portion of claim 1. Preferred embodiments of the invention are described by the features of the dependent claims.

Typically, in a case that the battery (3) is not charged by the one of the positive and negative waves of the AC voltage from the generator (2), the lamp lighting control circuit (7) controls the second switch element (SCR2) to conduct the other of the positive and negative waves of the AC voltage from the generator (2) to the lamp (5) with a delay (Td) from a point of time (T1) when the other of the positive and negative waves of the AC voltage begins to be generated from the generator (2), and in a case where the battery (3) is charged by the one of the positive and negative waves of the AC voltage from the generator (2), the lamp lighting control circuit (7) controls the second switch element (SCR2) to conduct the other of the positive and negative waves of the AC voltage from the generator (2) to the lamp (5) substantially without delay from the point of time (T1) when the other of the positive and negative waves of the AC voltage begins to be generated from the generator (2).

In this way, when the DC load such as a stop lamp is driven and the battery is charged for example by a positive voltage wave from the electric generator so that an inductance of the generator causes a delay in the start of generation of the subsequent negative voltage wave, the second switch element is turned on immediately as the negative voltage is generated, whereby an over-delay in conducting the negative voltage to the lamp can be eliminated. This can prevent the lamp voltage from excessively reducing and hence can prevent fluctuation in the lamp intensity when the DC load is driven. Such effects may be particularly beneficial when the lamp (5) comprises a headlight of a motorcycle.

For achieving such delay control, the system typically comprises a signal line (SL) for transmitting a signal indicating a state of the first switch element (SCR1) while the one of the positive and negative waves of the AC voltage is generated to the lamp lighting control circuit (7). Preferably, the signal line (SL) comprises a rectifying means for allowing an electric current to flow only toward the lamp lighting control circuit (7).

In one embodiment, the lamp lighting control circuit (7) comprises a delay circuit (9) comprising a capacitor (C13) adapted to be charged by the other of the positive and negative waves of the AC voltage from the generator (2) so that a time required to charge the capacitor (C13) to a prescribed level defines the delay (Td), the capacitor (C13) is further adapted to be charged by the one of the positive and negative waves of the AC voltage when the first switch element (SCR1) is in an on state. This allows the lamp lighting and battery charging control system to be achieved by a simple circuit configuration at low cost.

### BRIEF DESCRIPTION OF THE DRAWINGS

Now the present invention is described in the following with reference to the appended drawings, in which:
Figure 1 is a block diagram for showing a typical lamp lighting and battery charging control system;
Figure 2 is a circuit diagram for showing an exemplary concrete configuration of a lamp lighting and battery charging control system;
Figure 3 is a waveform diagram for showing the lamp lighting and battery charging control according to the system of Figure 2;
Figure 4 is a circuit diagram for showing a lamp lighting and battery charging control system according to one embodiment of the present invention;
Figure 5 is a waveform diagram for showing the lamp lighting and battery charging control according to one embodiment of the invention; and
Figure 6 is a circuit diagram for showing a lamp lighting and battery charging control system according to another embodiment of the present invention; and
Figure 7 is a waveform diagram for showing the lamp lighting and battery charging control according to the another embodiment of the invention.

### DETAILED DESCRIPTION OF THE PREFERRED EMBODIMENTS

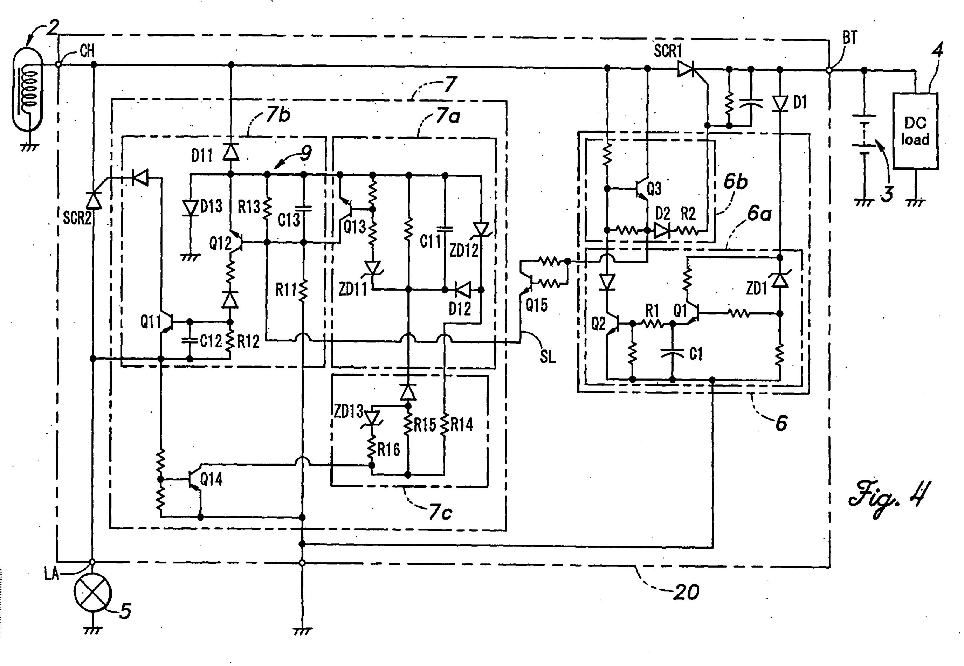

Figure 4 is a schematic circuit diagram showing an embodiment of a lamp lighting and battery charging control system according to the present invention. In this drawing, component parts similar to those shown in the embodiment of Figure 2 are denoted with the same reference numerals and a detailed explanation thereof is omitted.

In a lamp lighting and battery control system 20 shown in Figure 4, one end of the delay circuit 9 connected to the base of the transistor Q12 in the thyristor drive block 7b of the lamp lighting control circuit 7 is connected to the anode of the diode D2 in the thyristor drive block 6b of the battery charging control circuit 6 by a signal line SL containing a transistor Q15 which can serve as a rectifying means for allowing only an electric current toward the delay circuit 9. Further, the other end of the delay circuit 9 which is connected to the emitter of the transistor Q12 is connected to the ground via a diode D13 so as to permit only an electric current toward the ground. Thus, when the battery voltage is low and the transistor Q2 in the battery voltage detecting block 6a is off, allowing the operation of the thyristor drive block 6b, upon generation of a positive voltage from the electric generator 2, the transistor Q15 is turned on to conduct an electric current toward the delay circuit 9 in the lamp voltage detecting block 7b. It should be appreciated that the transistor Q15 may be replaced by a diode or the like

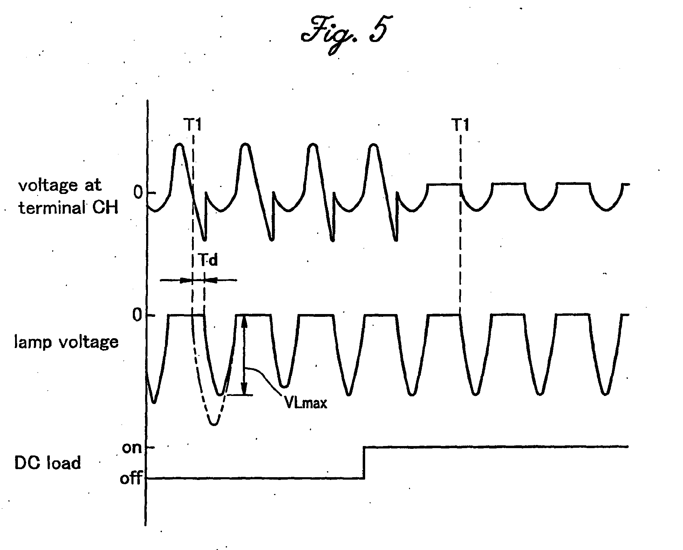

In this way, when the DC load 4 is driven, reducing the battery voltage, and a positive voltage generated from the electric generator 2 causes an electric current to flow through the diode D2 to the gate of the first thyristor SCR1 to turn it on, an electric current flows through the transistor Q15 to start charging the capacitor C13 in the delay circuit 9. Thus, the signal line SL comprising the transistor Q15 transmits a signal indicating that the first thyristor SCR1 is turned on to the delay circuit 9 in the lamp lighting control circuit 7. The capacitance of the capacitor C13 is selected such that the capacitor C13 is fully charged within a period of time while a single positive voltage half-wave is generated. Thus, because the capacitor C13 has been fully charged before the generation of the negative voltage, charging of the capacitor C13 by the negative voltage is not necessary. As a result, when the DC load 4 is driven, the transistor Q12 and hence the second thyristor SCR2 are turned on to cause an electric current to flow through the lamp 5 without the delay time Td from the start of negative voltage generation. Thus, the start of conduction of the negative voltage to the lamp 5 is prevented from excessively delaying, whereby the over-reduction in the negative voltage is prevented and the fluctuation of the lamp voltage is avoided, as shown in Figure 5.

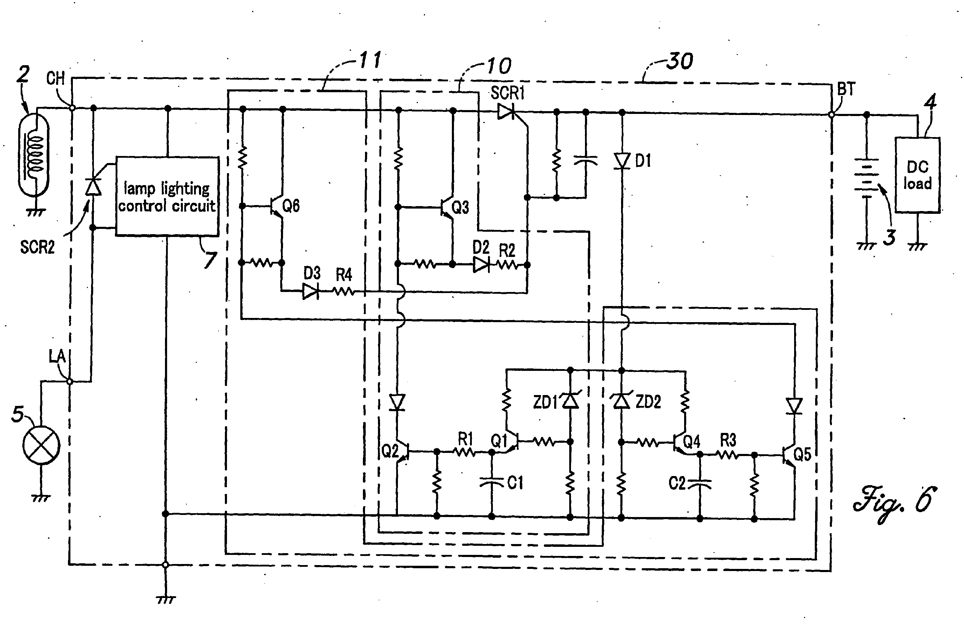

Figure 6 is a schematic circuit diagram showing another embodiment of a lamp lighting and battery charging control system according to the present invention. In this drawing also, component parts similar to those shown in the embodiment shown in Figure 2 are denoted with the same reference numerals and a detailed explanation thereof is omitted.

The lamp lighting and battery charging control system 30 shown in Figure 6 comprises first and second battery charging control circuits 10,11 which are connected in parallel with each other. These two circuits 10, 11 each have the same circuit configuration as the battery charging control circuit 6 of the embodiment shown in Figure 2. However, the resistance R1 in the first battery charging control circuit 10 connected between the capacitor C1 and the base of the transistor Q2 has a smaller resistance than the corresponding resistor R3 associated with the transistor Q5 in the second battery charging control circuit 11. In other words, the CR time constant circuit in the base circuit of the transistor Q2 has a smaller time constant than that in the base circuit of the transistor Q5. Further, the resistor R2 in the first circuit 10 connected between the diode D2 and the gate of the thyristor SCR1 has a greater resistance than the corresponding resistor R4 in the second circuit 11.

In the following, a way of operation of the above constructed system in starting the battery charging from a state that the battery 3 is fully charged is described. First, in the state that the battery 3 is fully charged, the transistors Q1, Q2 are on while the transistor Q3 is off. Similarly, the transistors Q4, Q5 are on while the transistor Q6 is off. Therefore, it is prevented to trigger the battery charging control transistor SCR1 to turn on. This prevents an electric current from flowing to the battery 3 through the terminal BT.

When the DC load 4 is driven (turned on) and substantial electric charge of the battery 3 is consumed, the battery voltage decreases. This causes the transistors Q1, Q4 to turn off, which in turn cause the associated transistors Q2, Q5 to turn off respectively. It should be noted here that due to the difference in the time constant between the CR time constant circuits C1·R1 and C2·R3 resulting from the difference in the resistance between the resistors R1 and R3 - mentioned above, the transistor Q2 in the first battery charging control circuit 10 turns off earlier than the transistor Q5 in the second circuit 11, and thus, the transistor Q3 in the first circuit 10 turns on earlier than the transistor Q6 in the second circuit 11.

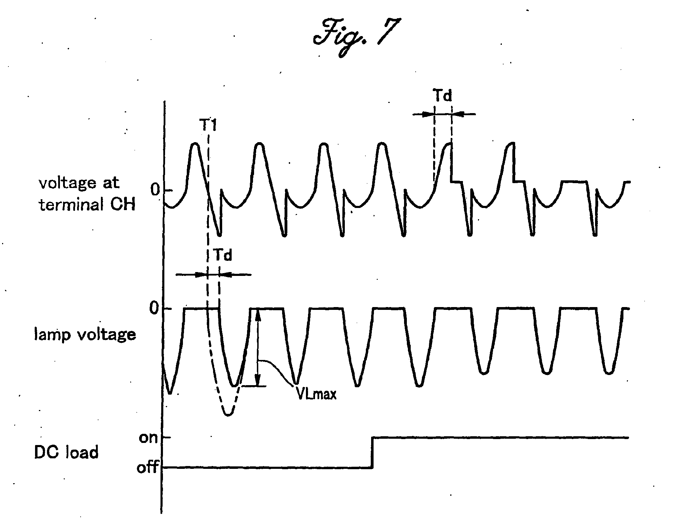

When the transistor Q3 is in the on state, a small electric current flows to the gate of the first thyristor SCR1 as a trigger signal because the current passes through the resistor R2 having a relatively large resistance. Thus, the thyristor SCR1 does not immediately turns on, but instead, as shown in an upper waveform of Figure 7, for example, the thyristor SCR1 turns on after a delay Tb from the start of generation of the positive voltage from the electric generator 2 (at a middle of the duration period of a positive voltage half-wave, in the drawing). This can prevent a large electric current from flowing through the electric generator 2 when the positive wave is generated and thereby reduce the influence of the inductance of the electric generator 2 on the control of negative voltage supply to the lamp 5. Therefore, as shown in Figure 7, when the DC load 4 such as the stop lamp is driven, the lamp voltage is kept from excessively decreasing and the momentary darkening of the lamp 5 is prevented.

Thereafter, as the capacitor C2 in the second battery charging control circuit 11 is discharged to a degree that the transistor Q5 is turned off, the transistor Q6 is accordingly allowed to be turned on. In this state, a positive voltage wave from the generator 2 causes both of the transistors Q3 and Q6 to turn on. In such a situation, because a large electric current (gate current) can flow to the gate of the thyristor SCR 1 through the resistor R4 having a small resistance, the thyristor SCR1 is quickly turned on after the turning on of the transistor Q6. Thus, as shown in a right-hand side of the upper waveform of Figure 7, a substantially whole part of the positive wave can be used in charging the battery 3.

The time constant of the CR time constant circuit C2·R3 in the second battery charging control circuit 11 is set such that the transistor Q5 is turned off after at least one positive voltage half-wave has been generated from the start of driving of the DC load 4 at a low engine speed (idling speed and its neighborhood), so that it is ensured that the above described part-wave battery charging is conducted at such a low engine speed. At a high engine speed, because the voltage frequency is high, even if the negative wave generation is delayed, the momentary darkening of the lamp due to the voltage drop becomes inconspicuous and causes no problem.

Thus, according to the present invention, in a lamp lighting and battery charging control system for conducting lamp lighting and battery charging using an AC voltage generated by an electric generator driven by an internal combustion engine, it is prevented that the battery charging undesirably influence conducting lamp lighting control, to thereby achieve favorable lamp lighting without lamp intensity fluctuation or momentary darkening due to the battery charging which may take place when driving a DC load such as a stop lamp.

Although the present invention has been described in terms of a preferred embodiment thereof, it is obvious to a person skilled in the art that various alterations and modifications are possible without departing from the scope of the present invention which is set forth in the appended claims.

For example, although the system of Figure 6 comprises two separate battery charging control circuit 10, 11, a part thereof (such as zener diodes ZD1 and ZD2, and resistors connecting the zener diodes to the ground) may be integrated so as to be used in common. Further, although in the shown embodiment, positive waves were used in charging the battery and negative waves were used in lighting the lamp, the polarity of the voltage may be reversed. These and other modifications should fall within the scope of the present invention.

## Claims

1. A lamp lighting and battery charging system, comprising:
an electric generator (2) which is driven by an internal combustion engine to generate an AC voltage comprising positive and negative waves;
a first switch element (SCR1) connected between the electric generator (2) and a battery (3) for providing DC voltage to a DC load (4);
a battery charging control circuit (6) for controlling the first switch element (SCR1) so that the battery (3) is charged by one of positive and negative waves of the AC voltage from the generator (2);
a second switch element (SCR2) connected between the electric generator (2) and a lamp (5); and
a lamp lighting control circuit (7) for controlling the second switch element so that the lamp (5) is supplied with the other of the positive and negative waves of the AC voltage from the generator (2), whereby
the lamp lighting control circuit (7) changes a turn-on timing of the second switch element (SCR2) with respect to a point of time (T1) when the other of the positive and negative waves of the AC voltage begins to be generated, **characterized in that** the turn-on timing is changed depending on a state of battery charging control conducted by the battery charging control circuit (6).

2. A lamp lighting and battery charging system according to claim 1, wherein:
in a case that the battery (3) is not charged by the one of the positive and negative waves of the AC voltage from the generator (2), the lamp lighting control circuit (7) controls the second switch element (SCR2) to conduct the other of the positive and negative waves of the AC voltage from the generator (2) to the lamp (5) with a delay (Td) from a point of time (T1) when the other of the positive and negative waves of the AC voltage begins to be generated from the generator (2), and
in a case where the battery (3) is charged by the one of the positive and negative waves of the AC voltage from the generator (2), the lamp lighting control circuit (7) controls the second switch element (SCR2) to conduct the other of the positive and negative waves of the AC voltage from the generator (2) to the lamp (5) substantially without delay from the point of time (T1) when the other of the positive and negative waves of the AC voltage begins to be generated from the generator (2).

3. A lamp lighting and battery charging system according to claim 2, wherein the system comprises a signal line (SL) for transmitting a signal indicating a state of the first switch element (SCR1) while the one of the positive and negative waves of the AC voltage is generated to the lamp lighting control circuit (7).

4. A lamp lighting and battery charging system according to claim 3, wherein the signal line (SL) comprises a rectifying means for allowing an electric current to flow only toward the lamp lighting control circuit (7).

5. A lamp lighting and battery charging system according to claim 1, wherein the lamp lighting control circuit (7) comprises a delay circuit (9) comprising a capacitor (C13) adapted to be charged by the other of the positive and negative waves of the AC voltage from the generator (2) so that a time required to charge the capacitor (C13) to a prescribed level defines the delay (Td), the capacitor (C13) is further adapted to be charged by the one of the positive and negative waves of the AC voltage when the first switch element (SCR1) is in an on state.

6. A lamp lighting and battery charging system according to claim 1, wherein the lamp comprises a headlight of a motorcycle.

## Patentansprüche

1. Lampeneinschalt- und Batterielade-System, umfassend:
einen elektrischen Generator (2), der von einer Verbrennungskraftmaschine angetrieben wird, um eine Wechselspannung zu generieren, die positive und negative Wellen umfasst;
ein erstes Schaltelement (SCR1), das zwischen dem elektrischen Generator (2) und einer Batterie (3) angeschlossen ist, um einen Gleichstromverbraucher (4) mit einer Gleichspannung zu versorgen;
eine Batterielade-Steuerschaltung (6) zum Steuern des ersten Schaltelements (SCR1), so dass die Batterie (3) von einer der positiven und negativen Wellen der Wechselspannung aus dem Generator (2) aufgeladen wird;
ein zweites Schaltelement (SCR2), das zwischen dem elektrischen Generator (2) und einer Lampe (5) angeschlossen ist; und
eine Lampeneinschalt-Steuerschaltung (7) zum Steuern des zweiten Schaltelements, so dass die Lampe (5) mit der anderen der positiven und negativen Wellen der Wechselspannung aus dem Generator (2) versorgt wird, wodurch
die Lampeneinschalt-Steuerschaltung (7) eine Anschaltzeiteinstellung des zweiten Schaltelements (SCR2) mit Bezug auf einen Zeitpunkt (T1) ändert, zu dem die Generierung der anderen der positiven und negativen Wellen der Wechselspannung beginnt,
**dadurch gekennzeichnet, dass** die Anschaltzeiteinstellung in Abhängigkeit von einem Zustand der Batterieladesteuerung, die von der Batterielade-Steuerschaltung (6) vorgenommen wird, geändert wird.

2. Lampeneinschalt- und Batterielade-System nach Anspruch 1, wobei:
falls die Batterie (3) nicht von der einen der positiven und negativen Wellen der Wechselspannung aus dem Generator (2) aufgeladen wird, die Lampeneinschalt-Steuerschaltung (7) das zweite Schaltelement (SCR2) steuert, um die andere der positiven und negativen Wellen der Wechselspannung aus dem Generator (2) mit einer Verzögerung (Td) im Verhältnis zu einem Zeitpunkt (T1), zu dem die Generierung der anderen der positiven und negativen Wellen der Wechselspannung aus dem Generator (2) beginnt, zu der Lampe (5) zu leiten, und
falls die Batterie (3) von der einen der positiven und negativen Wellen der Wechselspannung aus dem Generator (2) aufgeladen wird, die Lampeneinschalt-Steuerschaltung (7) das zweite Schaltelement (SCR2) steuert, um die andere der positiven und negativen Wellen der Wechselspannung aus dem Generator (2) im Wesentlichen ohne Verzögerung im Verhältnis zu dem Zeitpunkt (T1), zu dem die Generierung der anderen der positiven und negativen Wellen der Wechselspannung aus dem Generator (2) beginnt, zu der Lampe (5) zu leiten.

3. Lampeneinschalt- und Batterielade-System nach Anspruch 2, wobei das System eine Signalleitung (SL) umfasst, um ein Signal zu übertragen, das einen Zustand des ersten Schaltelements (SCR1) angibt, während die andere der positiven und negativen Wellen der Wechselspannung für die Lampeneinschalt-Steuerschaltung (7) generiert wird.

4. Lampeneinschalt- und Batterielade-System nach Anspruch 3, wobei die Signalleitung (SL) ein Gleichrichtungsmittel umfasst, um es einem elektrischen Strom zu erlauben, nur in Richtung auf die Lampeneinschalt-Steuerschaltung (7) zu fließen.

5. Lampeneinschalt- und Batterielade-System nach Anspruch 1, wobei die Lampeneinschalt-Steuerschaltung (7) eine Verzögerungsschaltung (9) umfasst, die einen Kondensator (C13) umfasst, der dazu geeignet ist, von der anderen der positiven und negativen Wellen der Wechselspannung aus dem Generator (2) aufgeladen zu werden, so dass eine Zeit, die benötigt wird, um den Kondensator (C13) bis auf ein vorgeschriebenes Niveau aufzuladen, die Verzögerung (Td) definiert, wobei der Kondensator (C13) ferner dazu geeignet ist, von der anderen der positiven und negativen Wellen der Wechselspannung aufgeladen zu werden, wenn das erste Schaltelement (SCR1) sich in einem angeschalteten Zustand befindet.

6. Lampeneinschalt- und Batterielade-System nach Anspruch 1, wobei die Lampe einen Scheinwerfer eines Motorrads umfasst.

## Revendications

1. Système d'allumage de feu et de charge de batterie, comprenant :
une génératrice électrique (2) qui est entraînée par un moteur à combustion interne pour générer une tension alternative comprenant des ondes positive et négative ;
un premier élément de commutation (SCR1) connecté entre la génératrice électrique (2) et une batterie (3) pour appliquer une tension continue à une charge continue (4) ;
un circuit de commande de charge de batterie (6) pour commander le premier élément de commutateur (SCR1) de sorte que la batterie (3) soit chargée par l'une des ondes positive et négative de la tension alternative provenant de la génératrice (2) ;
un deuxième élément de commutation (SCR2) connecté entre la génératrice électrique (2) et un feu (5) ; et
un circuit de commande d'allumage de feu (7) pour commander le deuxième élément de commutation de sorte que le feu (5) reçoive l'autre des ondes positive et négative de la tension alternative provenant de la génératrice (2), moyennant quoi
le circuit de commande d'allumage de feu (7) modifie une synchronisation de fermeture du deuxième élément de commutation (SCR2) par rapport à un instant (T1) auquel l'autre des ondes positive et négative de la tension alternative commence à être générée, **caractérisé en ce que** la synchronisation de fermeture est modifiée en fonction d'un état de la commande de charge de batterie effectuée par le circuit de commande de charge de batterie (6).

2. Système d'allumage de feu et de charge de batterie selon la revendication 1, dans lequel :
dans un cas où la batterie (3) n'est pas chargée par l'une des ondes positive et négative de la tension alternative provenant de la génératrice (2), le circuit de commande d'allumage de feu (7) commande le deuxième élément de commutation (SCR2) pour conduire l'autre des ondes positive et négative de la tension alternative provenant de la génératrice (2) vers le feu (5) avec un retard (Td) par rapport à un instant (T1) auquel l'autre des ondes positive et négative de la tension alternative commence à être générée par la génératrice (2), et
dans un cas où la batterie (3) est chargée par ladite une des ondes positive et négative de la tension alternative provenant de la génératrice (2), le circuit de commande d'allumage de feu (7) commande le deuxième élément de commutation (SCR2) pour conduire l'autre des ondes positive et négative de la tension alternative provenant de la génératrice (2) vers le feu (5) sensiblement sans retard par rapport à l'instant (T1) auquel l'autre des ondes positive et négative de la tension alternative commence à être générée par la génératrice (2).

3. Système d'allumage de feu et de charge de batterie selon la revendication 2, dans lequel le système comprend une ligne de signal (SL) pour transmettre un signal indiquant un état du premier élément de commutation (SCR1) tandis que ladite une des ondes positive et négative de la tension alternative est générée au circuit de commande d'allumage de feu (7).

4. Système d'allumage de feu et de charge de batterie selon la revendication 3, dans lequel la ligne de signal (SL) comprend des moyens de redressement pour ne permettre la circulation d'un courant électrique que vers le circuit de commande d'allumage de feu (7).

5. Système d'allumage de feu et de charge de batterie selon la revendication 1, dans lequel le circuit de commande d'allumage de feu (7) comprend un circuit à retard (9) comprenant un condensateur (C13) conçu pour être chargé par l'autre des ondes positive et négative de la tension alternative provenant de la génératrice (2) de sorte qu'un temps nécessaire pour charger le condensateur (C13) à un niveau prescrit définit le retard (Td), le condensateur (C13) étant en outre conçu pour être chargé par ladite une des ondes positive et négative de la tension alternative lorsque le premier élément de commutation (SCR1) est dans un état fermé.

6. Système d'allumage de feu et de charge de batterie selon la revendication 1, dans lequel le feu comprend un phare d'une moto.
